# EUROPEAN PATENT SPECIFICATION

(11) **EP 1 511 027 B1**
(45) Date of publication and mention of the grant of the patent: **01.07.2009**
(21) Application number: 04020654.2
(22) Date of filing: 31.08.2004
(51) Int. Cl.: G11B 7/26, G11B 7/24

(54) **Fabrication method of stamper for optical information recording medium, master disk of stamper for optical information recording medium**
Verfahren zur Herstellung eines Prägestempels für optische Informationsmedien, Originalplatte eines solchen Prägestempels
Procédé de fabrication d'une matrice de pressage pour des supports d'informations optiques, disque maître correspondant

(30) Priority: 01.09.2003 JP 2003308416
(43) Date of publication of application: 02.03.2005
(73) Proprietor: Panasonic Corporation, Kadoma-shi Osaka 571-8501 (JP)
(72) Inventor: Tomiyama, Morio, Ikoma-shi Nara 630-0136 (JP); Ito, Eiichi, Nishinomiya-shi Hyogo 663-8033 (JP); Kawaguchi, Yuuko, Ibaraki-shi Osaka 567-0046 (JP)
(74) Representative: Grünecker, Kinkeldey, Stockmair & Schwanhäusser Anwaltssozietät

(56) References cited:
- EP-A- 1 482 494
- US-A- 5 043 251
- US-A- 5 051 340
- US-A1- 2002 115 023
- US-A1- 2003 064 293
- US-B1- 6 228 562

## Description

### BACKGROUND OF THE INVENTION

### Field of the Invention

The present invention relates to a fabrication method of a stamper for an optical information recording medium, a master disk of a stamper for an optical information recording medium, in order to fabricate a high-density optical information recording medium in accordance with the dry etching method.

### Related Art of the Invention

US 6,228,562 B1 discloses a method for manufacturing a recording original disk for optical information recording media. It discloses a method comprising the steps of: forming a layer in the photoresist layer on a substrate, exposing the photoresist layer to a laser beam, developing the photoresist layer to form opening portions, carrying out an etching treatment using the photoresist layer as a mask, then removing the residual photoresist layer to form recess portions in the etching applied layer. Furthermore, an electroforming process is carried out by providing a conductive film on the surface of the recording original disk, performing electroforming and exfoliating the recording original disk.

US 5,051,340 used for the two-part delimitation of appended claim 1 discloses a master for optical element replication in which no photoresist is used in the fabrication process but a phase change optical recording element which is exposed so as to form a pattern by changing the crystalline state.

Because an amount of information necessary for information apparatus and audiovisual apparatus increases, an optical disk superior in easiness for data access, accumulation of a large quantity of data and downsizing of apparatuses is noticed as an optical information recording medium and the density of information recorded thereof is increased. For example, a single-layer optical disk having a single-capacity of 25 GB is proposed in which the wavelength of a laser beam for reproducing a signal is set to approx. 400 nm as means of increasing the density of the optical disk and for which a reproducing head having a numerical aperture (NA) of 0.85 as a condensing lens of narrowing down the laser beam is used.

An optical disk is generally fabricated by working a resin in accordance with the injection compression molding using a stamper fabricated from a master disk.

A technique of forming a smaller signal pit on a step of fabricating the master is requested as the density of information has been increased in recent years.

The master disk of an optical disk is fabricated as described below. That is, photoresist is applied onto a glass plate serving as a substrate and the photoresist is exposed by a laser beam whose intensity is modulated in accordance with a signal to be recorded. Moreover, when the photosensitive portion of the photoresist is developed, a concave-convex signal pit is obtained on the photoresist and the master disk is finished.

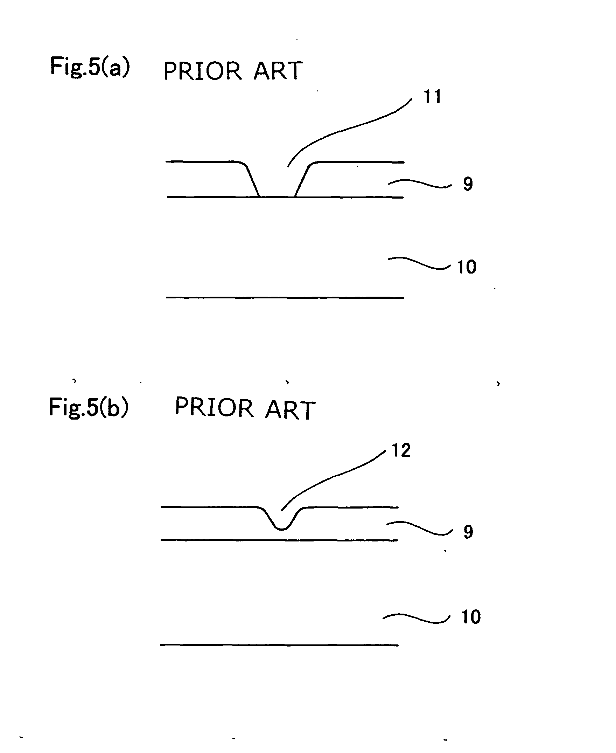

Figure 5 shows a sectional view of the signal pit portion of a master disk when fabricating a signal pit on the master disk by exposing conventional photoresist. Because exposure values of the exposed portion of the photoresist and its circumferential portion are continuously changed, a remaining film quantity for development continuously changes around the exposed pit. Therefore, by performing exposure and development with a laser beam, a normal signal pit 11 having a shape in which an edged portion forms a slope and its bottom reaches up to a substrate 10 is formed on the photoresist 9 on the substrate 10 as shown in Figure 5(a).

Moreover, to fabricate a high-density optical information recording medium such as a Blu-ray disk, it is necessary to decrease the size of a laser-beam narrowing-down spot in order to decrease the size of a pit to be formed on a master disk. Figure 5(b) shows a sectional view when decreasing the size of a lager-beam narrowing-down spot. As shown in Figure 5 (b) , a normal signal pit cannot be formed, and the shape of a signal pit becomes the shape of a signal pit 12 whose bottom does not reach the substrate 10 and which is consisted of only an edged portion. This is because of the following reason. That is, because exposure values of the exposed portion of the photoresist 9 and its circumferential portion are continuously varied, the bottom is not exposed until it reaches the substrate 10 in the depth direction of the photoresist at an exposure value necessary to increase the pit diameter up to a desired value while the bit diameter is excessively increased at an exposure value at which the bottom reaches the substrate 10.

In the case of the above trouble, as one means of forming a small signal pit without being influenced by a continuous change of remaining film quantity around the signal pit, a method is proposed in which a chalcogen compound or an inorganic oxide containing a transition metal is used for photoresist (for example, refer to the Japanese Patent Laid-Open No. 10-97738).

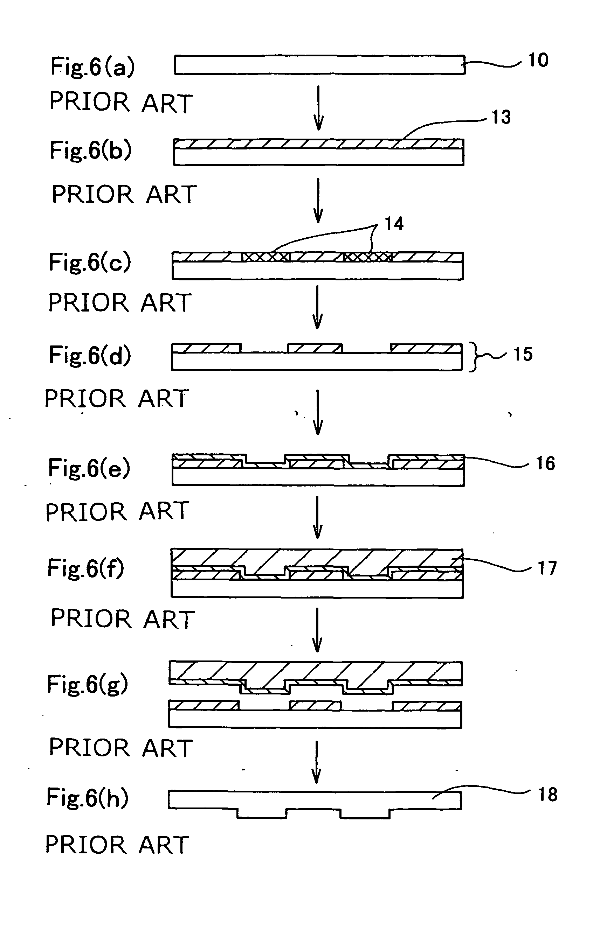

Figures 6 (a) to 6 (h) shows a fabrication step of a stamper for an optical information recording medium when using a chalcogen compound which is an inorganic compound for photoresist.

By performing exposure of forming a chalcogen thin film 13 serving as photoresist on the substrate 10 (Figure 6 (a), (b) ) , a crystal-state portion 14 is formed by locally raising and lowering the temperature of the photoresist (Figure 6 (c)). Because crystal states are different in an exposed portion and unexposed portion, etching rates due to development are different from each other. By using the fact that the etching rates are different and selectively development and removing an amorphous portion or crystal portion, it is possible to obtain a master disk 15 on which a concave-convex signal pit having an accurate shape not having a continuously-changed slope-like edge or having a greatly reduced edge is formed (Figure 6 (d)). Moreover, a conductive film 16 is formed on the surface of the master disk 15 (Figure 6 (e)), electroforming is performed by using the conductive film 16 as an electrode to form a metallic layer 17 having a thickness of hundreds of microns (Figure 6 (f)). Then, the portion constituted by the conductive film 16 and the metallic layer 17 is removed from the master disk 15 (Figure 6 (g)). By cleaning the surface of the removed portion constituted by the conductive film 16 and the metallic layer 17, a stamper 18 for an optical information recording medium is obtained (Figure 6 (h)).

When fabricating an optical disk by the stamper 18 by using the photosensitive recording method mentioned above, a more-accurate signal pit is obtained. Therefore, a finer signal can be formed comparedwith the case of performing signal recording using the optical chemical reaction shown in Figure 5 by using laser beams having the same wavelength.

However, when fabricating a master disk in which a concave-convex signal pit of inorganic oxide resist is formed on a substrate and transferring and forming the concave-convex signal pit on the inorganic oxide resist to and on a metallic stamper through electroforming by the method disclosed in the document above, there is a problem that electroforming cannot be correctly performed.

In this case, electroforming is performed by forming the conductive film 16 on the chalcogen thin film 13 serving as inorganic oxide resist on which a signal pit is formed and using the surface of the film 16 as a cathode and a metallic material to be laminated on the conductive film 16 as an anode. By applying a voltage, an electrical reaction such as an oxidation-reduction reaction occurs in the chalcogen thin film 13. In this case, cracks or exfoliation occurs in the chalcogen thin film 13, thereby the conductive film 16 is broken, and electroforming may not be correctly performed. This is because an inorganic oxide having a property suitable for the etching that compositions are easily changed has a property to be easily reacted for formation of a metallic layer using an oxidation-reduction reaction due to electroforming.

To solve the above problems, the present invention provides a fabrication method of a stamper for an optical information recording medium by which electroforming can be preferably performed and a fine and accurate signal pit can be formed, a master disk of a stamper for an optical information recording medium, and an optical information recording medium.

### SUMMARY OF THE INVENTION

The invention is defined by the appended claims.

The 1^{st} aspect of the present invention is a fabrication method of a stamper for an optical information recording medium comprising:
a step of changing the crystal state of a specific portion of a photoresist layer of a master disk having at least an etching layer formed on an etching stopper layer and the photoresist layer which can be etched, formed on the etching layer through exposure,
a step of selectively removing the specific portion of the photoresist layer whose crystal state is changed or portions other than the specific portion through etching,
a step of selectively removing a part of the etching layer which appears because the photoresist layer is removed and is exposed to the outside through etching,
a step of removing the remaining portion of the photoresist layer and forming a conductive film on the surfaces of the etching stopper layer and the etching layer,
a step of performing electroforming by using the conductive film as an electrode, and
a step of exfoliating the etching layer and the etching stopper layer from the conductive film,

wherein
the etching layer contains a material having an acid resistance as a main component, and
the photoresist layer contains inorganic oxide as a main component different from the material having an acid resistance in raw material or composition.

The 2^{nd} aspect of the present invention is the fabrication method of a stamper for an optical information recordingmedium according to the first aspect of the present invention, wherein
the material having an acid resistance is an acid-resistant resin material.

The 3^{rd} aspect of the present invention is the fabrication method of a stamper for an optical information recordingmedium according to the first aspect of the present invention, wherein
the etching layer is a resin which can be dry-etched by oxygen or gas containing oxygen.

The 4^{th} aspect of the present invention is the fabrication method of a stamper for an optical information recordingmedium according to the first aspect of the present invention, wherein
the etching layer is made of a material containing acrylic or polyimide as a main component.

The 5^{th} aspect of the present invention is the fabrication method of a stamper for an optical information recording medium according to the first aspect of the present invention, wherein
the etching stopper layer is made of any one of materials Si, SiO₂, ZnSiO₂, and SiN.

The 6^{th} aspect of the present invention is the fabrication method of a stamper for an optical information recordingmedium according to the first aspect of the present invention, wherein
the material having an acid resistance is acid-resistant inorganic oxide.

The 7^{th} aspect of the present invention is the fabrication method of a stamper for an optical information recordingmedium according to the 6^{th} aspect of the present invention, wherein
the etching layer is made of a material containing SiO₂ as a main component, and
the etching of removing the etching layer is dry etching according to CHF-based gas.

The 8^{th} aspect of the present invention is the fabrication method of a stamper for an optic6^{th} aspect of the present invention, wherein
the etching stopper layer is made of an Si material.

The 9^{th} aspect of the present invention is the fabrication method of a stamper for an optical information recording medium according to the 1^{st} aspect of the present invention, wherein
the thickness of the etching layer substantially ranges between 40 and 100 nm (both included).

The 10^{th} aspect of the present invention is the fabrication method of a stamper for an optical information recordingmedium according to the 1^{st} aspect of the present invention, wherein
the photoresist layer is made of any one of a semimetal, semimetal compound, oxide of semimetal or semimetal compound, nitride of semimetal or semimetal compound, transition metal, oxide of transition metal, and nitride of transition metal.

The 11^{th} aspect of the present invention is the fabrication method of a stamper for an optical information recording medium according to the 1^{st} aspect of the present invention, wherein
the conductive film is formed through electroless plating.

The 12^{th} aspect of the present invention is the fabrication method of a stamper for an optical information storing medium according to the 1^{st} aspect of the present invention, wherein
the step of forming the conductive film includes a step of forming a first Ni thin film through sputtering of an Ni material, a step of treating the surface of the first Ni thin film with plasma of O₂ or Ar gas, and a step of forming a second Ni thin film on the first Ni thin film through sputtering of an Ni material after the above treatment, and
the step of exfoliating the etching layer and the etching stopper layer from the conductive film includes a step of separating the layer on which the first Ni thin film is formed from the layer on which the second Ni thin film is formed.

The 13^{th} aspect of the present invention is the fabrication method of a stamper for an optical information storing medium according to the 1^{st} aspect of the present invention, wherein
the selection ratio of the etching layer to the photoresist layer is 1.0 or more.

The 14^{th} aspect of the present invention is a master disk of a stamper for an optical information recording medium having on a substrate an etching layer and a photoresist layer which is formed on the etching layer and can be etched on a substrate, wherein
the crystal state of a specific portion of the photoresist layer is changed through exposure and the specific portion or portions other than the specific portion is or are selectively removed through etching, and
a concave portion is formed on the etching layer because a part of the etching layer exposed to the outside formed when the photoresist layer is removed is selectively removed through etching.

The present invention makes it possible to provide a fabrication method of a stamper for an optical information recording medium by which electroforming can be preferably performed and a fine signal pit can be formed, a master disk of a stamper for an optical information recording medium, and an optical information recording medium.

### BRIEF DESCRIPTION OF THE DRAWINGS

Figures 1 (a) to 1 (i) are illustrations showing steps of a stamper fabrication method of the Embodiment 1 of the present invention.
Figures 2 (a) to 2 (j) are illustrations showing steps of a stamper fabricationmethodwhen formingtwo conductive layers in the Embodiment 1 of the present invention.
Figure 3 is a reproduced signal characteristic diagram of an optical information recording medium fabricated from the stamper in the Embodiment 1 of the present invention in accordance with the thickness of the etching layer 102 of a stamper master disk.
Figures 4 (a) to 4 (i) are illustrations showing steps of the stamper fabrication method in the Embodiment 2 of the present invention.
Figures 5 (a) and 5 (b) are sectional views showing a signal pit to be recorded in the master disk of a stamper of a conventional optical information recording medium.
Figures 6 (a) to 6 (h) are illustrations showing steps of a stamper fabrication method using a conventional chalcogen thin film.
Figure 7 is a reproduced signal characteristic diagram of an optical information recording medium fabricated from a stamper in the Embodiment 1 of the present invention in accordance with the selection ratio of a stamper master disk.

### Description of Symbols

101, 201, 301 Si substrate
102, 202, 302 Etching layer
103, 203, 303 Resist layer
104, 204, 304 Exposed portion
105, 205, 208, 305 Conductive film
106, 206, 306 Metallic layer
107, 207, 307 Stamper
108, 208, 308 Concave pattern
109, 209, 309 Signal pattern

### PREFERRED EMBODIMENTS OF THE INVENTION

Embodiments of the present invention are described below by referring to the accompanying drawings.

### [Embodiment 1]

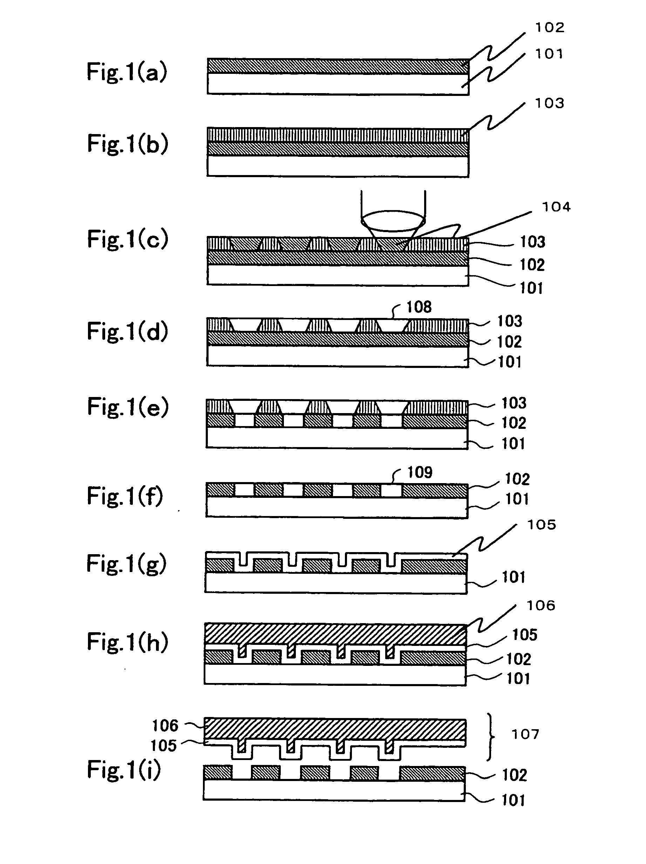

An example of the fabrication method of a stamper for an optical information recording medium of Embodiment 1 of the present invention is described below by referring to Figures 1 (a) to 1 (i). Figures 1 (a) to 1 (i) are illustrations showing steps of the fabrication method of a stamper for an optical information recording medium of the Embodiment 1.

First, an etching layer made of an acrylic material (content of 90% or more) 102 is formed on an Si substrate 101 through spin coating so that the thickness uniformly becomes approx. 60 nm over the entire surface (Figure 1(a)).

Then, a resist layer 103 made of photoresist formed by an inorganic oxide material of TeOxPd (0<x<2) is formed on the etching layer 102 (Figure 1 (b)).

Then, a laser beam whose intensity is modulated in accordance with a signal to be recorded and narrowed down by passing through a lens is applied through the surface of the resist layer 103 to change the crystal state of an exposed portion 104 (Figure 1 (c)).

Then, by using the etching rate difference due to the difference between crystal states of the resist layer 103 and applying a developer, etching of the exposed portion 104 whose crystal state is changed is selectively performed to form a substantially-mortar-shaped concave pattern 108 on the resist layer 103 (Figure 1 (d)).

Then, plasma dry etching using oxygen gas is performed from the surface side of the resist layer 103. The un-etched part in the etching layer 102 which is exposed to the outside by removing corresponding part of the resist layer 103, that is, a resist portion etched up to the interface of the etching layer 102 through development is removed through dry etching until it reaches the interface of the Si substrate 101 (Figure 1 (e)).

After the dry etching, the resist layer 103 is removed by an exfoliating solution of strong acid or alkali (Figure 1 (f)). Thereby, a concave signal pattern 109 is formed on the resist layer 103. The resist layer 103 having the concave signal pattern 109 and the Si substrate 101 constitute a master disk of a stamper.

Then, a conductive film 105 is formed on the surface of the etching layer 102 on which the concave signal pattern 109 is formed through dry etching in accordance with metal sputtering of Ni or the like (Figure 1 (g)).

Then, electroforming is performed by using the conductive film 105 as an electrode to form a metallic layer 106 having a thickness of hundreds of microns (Figure 1 (h)).

Finally, the portion constituted by the conductive film 105 andmetallic layer 106 is exfoliated from the etching layer 102 and Si substrate 101. Thus, a stamper 107 constituted by the conductive film 105 and metallic layer 106 is obtained.

In the above fabrication process, in the case of this embodiment, the concave signal pattern 109 shown in Figure 1(f) is formed by the etching used for the concave pattern 108 formed on the resist layer 103 which is photoresist in the etching layer 102. Thereby, it is not necessary to use a layer having a photoresist-like crystal structure like a conventional example as the etching layer 102 but it is possible to use a material not causing an electrical reaction such as an oxidation-reduction reaction due to application of a voltage during electroforming.

When fabricating a stamper by using the above etching layer 102 for a master disk, an electrical reaction such as an oxidation-reduction reaction does not occur in the etching layer 102 by applying a voltage during electroforming or the conductive film 105 is not influenced. Thus, it is possible to fabricate the preferable stamper 107.

The resist layer 103 is an example of photoresist of the present invention and an acrylic material forming the etching layer 102 is an example of materials having an acid resistance of the present invention. Moreover, TeOxPd forming the resist layer 103 is an example of inorganic oxide different from a material having an acid resistance of the present invention in material quality or composition. Furthermore, the exposed portion 104 is an example of a specific portion of a resist layer of the present invention. Furthermore, the configuration shown in Figure 1(e) after dry-etching the portion of the etching layer 102 is an example of the master disk of a stamper for an optical information recording medium of the present invention.

In the case of formation as shown in Figure 1 (a) of the etching layer 102 on the Si substrate 101, acrylic is extended and the film thickness of the acrylic on the Si substrate 101 is uniformed by dripping a liquid acrylic material mixed with a solvent such as PGMEA (propylene glycol monomethyl ether acetate) onto the Si substrate 101 and rotating the Si substrate 101. The applied acrylic is solidified through air drying at room temperature or by volatizing the solvent through a heat treatment at approx. 50°C. It is also allowed to previously add a silane coupling agent to the acrylic material mainly containing acrylic to be applied in order to improve the adhesiveness with the Si substrate 101. Moreover, to improve the adhesiveness between the Si substrate 101 and the etching layer 102, it is also allowed to set an adhesionmaterial compatible with these layers between the both layers.

Furthermore, any method can be used to form an acrylic material as long as a uniform film thickness can be obtained by the method and a method is not restricted to the above spin coating method. Furthermore, for this Embodiment 1, a case is described in which a material mainly containing acrylic is used. However, the same preferable characteristic can be obtained also by using a material (content of 90% or more) such as polyimide, which has a resistance against an alkali developer and acid developer and forms other organic film which can be etched by oxygen gas.

The resist layer 103 made of inorganic oxide formed on the etching layer 102 is normally formed through sputtering or vapor deposition method in vacuum as shown in Figure 1 (b) . Though this Embodiment 1 uses the TeOxPd (0<x<2) material as an inorganic oxide material, it is possible to use semimetal such as Te, Ge, Sb, Sn, Bi, or Se, semimetal compound, and oxide or nitride of the compound. Moreover, it is possible to use materials capable of withstanding dry etching using oxygen gas as a mask such as transition metals including Ti, Nb, Ta, Mo, W, and Pd, transition metal compound, and oxide or nitride of the compound.

A semiconductor laser beam having a wavelength of approx. 400 nm and a condensing lens having a numerical aperture (NA) of 0.95 are used to record data in the resist layer 103 as shown in Figure 1 (c). By using the semiconductor laser beam, high-speed direct modulation and high-speed exposure to the resist layer 103 are realized.

To selectively etch the exposed portion 104, this Embodiment 1 uses TMAH which is an alkali developer as a developer and performs development in accordance with the spin coating method as shown in Figure 1 (d). After the development using the alkali developer, rinsing is preformed by deionized water and drying is performed by a high-speed rotation. An alkali developer is not restricted to TMAH but any developer can be used as long as the developer can selectively etch the exposed portion 104. Moreover, it is allowed to use an acid developer capable of selectively etching the exposed portion 104 without being restricted to the alkali developer.

Furthermore, oxygen gas is used as the etching gas of the etching layer 102 formed by an acrylic material as shown in Figure 1 (e). However, it is also allowed to use a mixed gas containing oxygen or other gas without being restricted to oxygen gas as long as the gas has a preferable selection ratio with the resist layer 103. Moreover, this Embodiment 1 uses the Si substrate 101 as an etching stopper layer. However, when using a resin material such as an acrylic material and gas capable of performing etching, any material can be used as long as it has an etching resistance against the gas. For example, it is possible to realize a master disk having a preferable depth of the signal pit by using one of Si, SiO₂, ZnSiO₂, and SiN as an etching stopper layer.

In the case of electroforming using the conductive film 105 as an electrode, electroforming is performed by using a sulfamic-acid Ni bath having a pH of approx. 4.0, using an Ni conductive film 105 as a cathode and an Ni material to be laminated on the conductive film 105 as an anode so that the thickness of the metallic layer 106 becomes approx. 300 µm as shown in Figure 1 (h).

A case is described above in which the conductive film 105 is formed through Ni sputtering. However, it is possible to make exfoliation of the etching layer 102 from the conductive film 105 easy by forming the conductive film 105 through the electroless plating which is a wet method. When generally applying metallic sputtering of Ni to a resin material such as acrylic, the adhesiveness between the resin material and a metallic film of Ni is improved because the collision energy of the metallic material to the resin material is large. By performing electroless plating instead of sputtering, an Ni thin film is formed on the surface of the resin material serving as the etching layer 102 only by a reduction reaction. Therefore, it is possible to decrease the adhesiveness compared to the case of sputtering. Moreover, because the collision energy is not large as the case of sputtering, it is possible to avoid surfaces of the etching layer 102 and conductive film 105 from roughening.

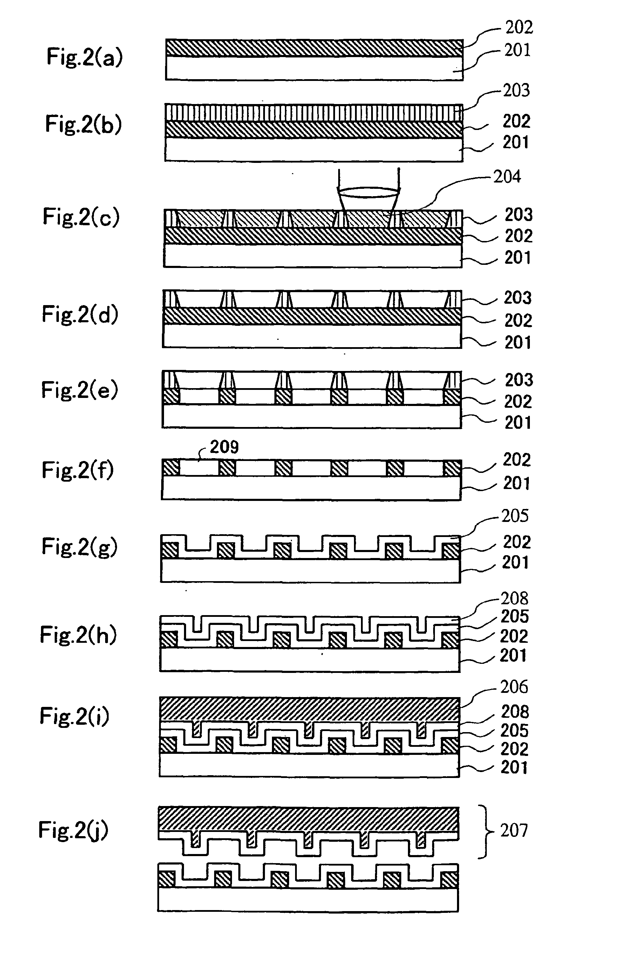

Moreover, when forming an Ni conductive film through sputtering, it is allowed to form the Ni conductive film into two layers so that a fabricated stamper can be easily exfoliated. Figure 2 shows steps of a fabrication method of a stamper for an optical information recording medium when forming an Ni conductive film into two layers. Because steps of (a) to (f) in Figure 2 of referring to an Si substrate 201, etching layer 202, resist layer 203, exposed portion 204, concave pattern 208, and signal pattern 209 correspond to steps of (a) to (f) in Figure 1, detailed description is omitted. The concave pattern 208 in Figure 2 (f) is formed so that the diameter is larger than the example shown in Figure 1(f) in order to form a conductive film into two layers.

In Figure 2, a first Ni thin film 205 is formed on a master disk having the Si substrate 201 and etching layer 202 through Ni sputtering to treat the surface of the first Ni thin film 205 through plasma of O₂ or Ar gas (Figure 2 (g)). Thereafter, a second Ni thin film 208 is formed through Ni sputtering. Then, electroforming is performed by using the second Ni thin film 208 as an electrode to form a metallic layer 206 having a thickness of hundreds of microns (Figure 2 (i) ) , a portion constituted by the second Ni thin film 208 and metallic layer 206 is exfoliated from the first Ni thin film 205 to obtain a stamper 207 (Figure 2 (j)).

By forming an exfoliation layer such as an oxide film on the surface of the first Ni thin film 205 through plasma treatment of O₂ or Ar gas, exfoliation can be easily made by the first Ni thin film 205 and the second Ni thin film 208.

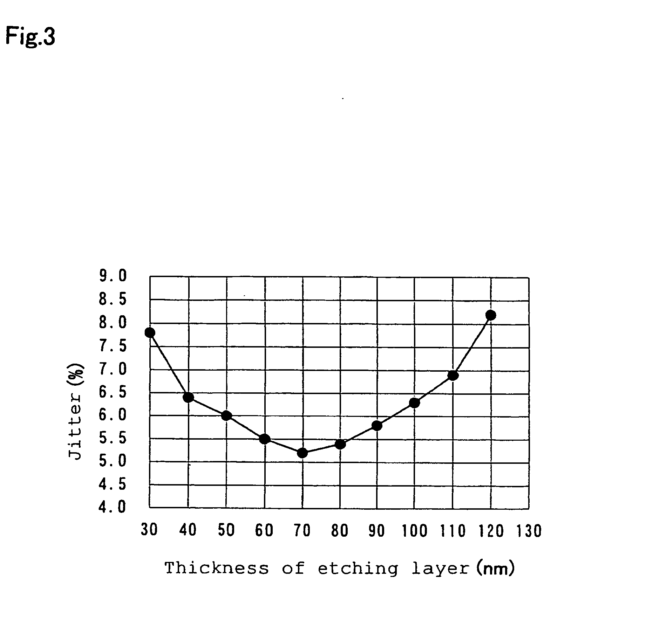

Figure 3 shows a relation between thicknesses of the etching layer 102 and signal characteristics of an optical information disk fabricated from the stamper 107 fabricated by the fabrication method of a stamper for an optical information recording medium of this Embodiment 1 in the method. In this case, the optical information disk is like a disk allowing high-density recording, for example, a Blu-ray disk corresponding disk and corresponds to a high-density optical information recording medium of the present invention.

By using a master disk fabricated by setting the thickness of the etching layer 102 serving as the depth of unevenness of the signal pit every 10 nm from 30 nm up to 120 nm, the stamper 107 is fabricated in accordance with the fabrication method of a stamper for an optical information recordingmedium of this Embodiment 1. A signal face formed on the stamper 107 is transferred to a polycarbonate resin in accordance with the injection compression molding of polycarbonate by using the stamper 107 as a mold. Then, a reflection film and a transparent cover layer are formed on the transferred signal face of the polycarbonate to fabricate a disk. Figure 3 shows a result of measuring the signal characteristic of the fabricated disk.

A signal used for this Embodiment 1 uses a 1-7 modulation format and has a track pitch of 0.32 µm and minimum pit length of 0.149 µm. A pit width, that is, the dimension at the side orthogonal to the read direction is 0.15 µm. The fabricated optical information disk is a disk having a diameter of 12 cm, which can accumulate the information having a capacity of 25 GB. In the case of the fabricated disk, a reflection mainly containing Ag is formed on the signal face of an injection-compression-molded substrate having a thickness of t1.1 mm up to approx. 50 nm and a transparent cover layer having a thickness of t0.1 mm and serving as a reproduced light projection face is formed on the reflection film. A reproducing head used to reproduce the fabricated disk, the wavelength of a laser beam is approx. 400 nm and the numerical aperture (NA) of a condensing lens of narrowing down the laser beam is 0.85.

Moreover, a signal jitter measuring method is used as a method of measuring a signal characteristic. The signal jitter measuring method is a method in which a jitter value increases when the fluctuation of a shape such as a size or depth of a formed individual signal is large. A jitter value serving as an index of a disk having a preferable reproducing characteristic is generally set to 6.5% or less. According to Figure 3, a jitter value of 6.5% or less is satisfied as a signal characteristics of a disk when the thickness of the etching layer 102 ranges between 40 and 10 nm. When the thickness of the etching layer 102 is 40 nm or less, the depth of a signal is too shallower than the depth of approx. 70 nm at which the S/N of a reproduced signal is most preferably obtained and thereby, it is considered that the S/N of the reproduced signal is not sufficient. Moreover, when the thickness of the etching layer 102 is 110 nm or more, it is too thicker than the depth of approx. 70 nm at which the S/N of the reproduced signal is most preferably obtained and it is considered that imperfect transfer occurs because a signal depth is too large in the injection compression step of polycarbonate. Therefore, in the case of the fabrication method of a stamper for an optical information recording medium of this Embodiment 1, it can be said that an optical information disk having a preferable signal characteristic can be fabricated from the stamper 107 fabricated by setting the thickness of the etching layer 102 in a range between 40 and 100 nm (both included).

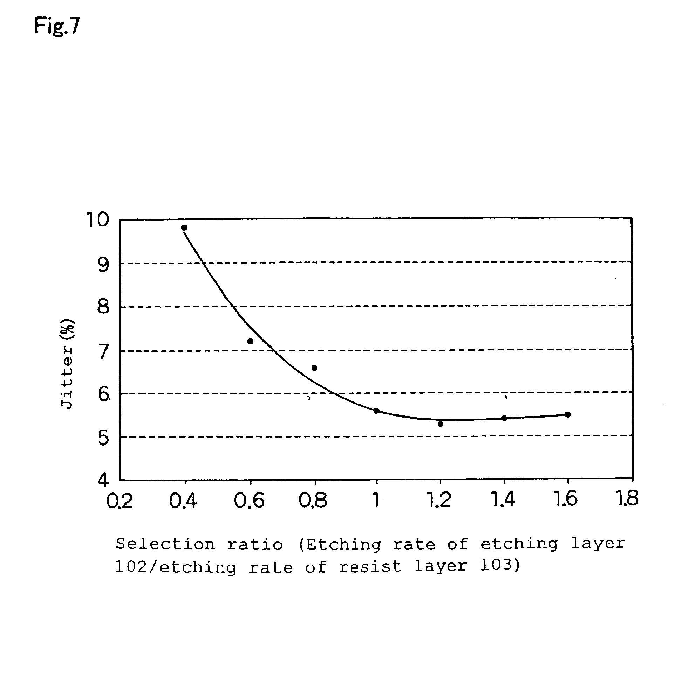

Moreover, Figure 7 shows a relation between selection ratios of etching rates of the etching layer 102 and etching rates of the resist layer 103 (etching rates of the etching layer 102/etching rates of the resist layer 103) and signal characteristics of an optical information disk fabricated from the fabricated stamper 107 according to the fabrication method of a stamper for an optical information recording medium of the Embodiment 1.

A selection ratio between the etching rate of the etching layer 102 and the etching rate of the resist layer 103 gives a ratio between the depth and the pit width of the concave pattern 108 formed in a master disk (aspect ratio) respectively corresponding to the depth and the pit width of a signal pit of the optical information disk is provided. By changing the former selecting ratio, it is possible to change the latter aspect ratio. The depth and diameter of the concave pattern 108 provide the height and the diameter of a convex portion serving as a transfer pattern of the stamper.

Therefore, the selection ratio also influences the accuracy of the fabricated optical information disk.

By using a master disk in which a selection ratio is set every 0.2 from 0.2 up to 1.6, the stamper 107 is fabricated in accordance with the fabrication method of a stamper for an optical information recording medium of this Embodiment 1. By using the stamper 107 as a mold, the signal face formed on the stamper 107 is transferred to polycarbonate resin in accordance with polycarbonate injection compression molding. Then, a reflection film and a transparent layer are formed on the transferred signal face of the polycarbonate to fabricate a disk. Figure 7 shows a result of measuring the signal characteristic of the fabricated disk. Other conditions are basically the same as those of the example shown in Figure 3.

According to Figure 7, a jitter value of 6.5% or less is satisfied at a selection ratio of approx. 0. 88 as the signal characteristic of a disk. Moreover, when exceeding 1, the jitter value reaches approx. 5.5% and thereafter, substantially becomes constant even if increasing the selection ratio.

When the selection ratio is 1 or less, the diameter of a concave portion corresponding to a signal pit becomes larger than the depth of the concave portion and it is considered that the S/N of a reproduced signal is not sufficient. Moreover, when the selection ratio exceeds 1, it is considered that the S/N of the reproduced signal reaches a limit, since the absolute values of the size or the depth of the pit no longer vary.

Therefore, in the case of the fabrication method of a stamper of this Embodiment 1 for an optical information recording medium, it can be said that an optical information disk having a preferable signal characteristic can be fabricated from the stamper 107 fabricated by substantially setting the selection ratio between the etching rate of the etching layer 102 and the etching rate of the resist layer 103 to at least 1 or more. A stamper for an optical information recording medium in which the ratio between the height and the diameter of a convex portion corresponding to the shape of a signal pit introduced from the selection ratio is substantially 1.0 or more is also included in the present invention.

In the case of the configuration having two conductive layers shown in Figure 2, the dimension of the transfer pattern of a stamper corresponding to a signal pit shape increases by a value equivalent to the thickness of a conductive layer. Therefore, it is allowed that a selection ratio is smaller than the example shown in Figure 7.

Moreover, it is possible to obtain a necessary signal pit and the same aspect ratio by the conventional fabrication method. However, as described above, because the conventional fabrication method is different from this embodiment in the fabrication method of the concave pattern 108, accuracies of the margin and end face of the pit of the information recording face of a fabricated optical information disk are deteriorated and it is difficult to obtain the preferable jitter value shown in Figure 7. Moreover, it is needless to say that the yield when fabricating a stamper is deteriorated.

As described above, in the case of the fabrication method of a stamper for an optical information recording medium of this Embodiment 1, preferable electroforming can be made because of using a resin material withstanding an acid solution . having a pH value of 3.0 or more generally used for electroforming as the etching layer 102 and forming a concave convex pattern of signal pits on the etching layer 102. Moreover, an electrical reaction such as oxidation-reduction reaction is not caused due to application of a voltage during electroforming and therefore, the preferable stamper 107 can be fabricated. Furthermore, it is possible to fabricate a disk having a preferable signal characteristic by injection-compression-molding a substrate using the stamper 107. Furthermore, because of using a resin material for the etching layer 102 and a material having a hardness lower than that of a metallic material of the stamper 107, it is possible to prevent a signal shape of the stamper 107 from deforming in an exfoliation step.

### [Embodiment 2]

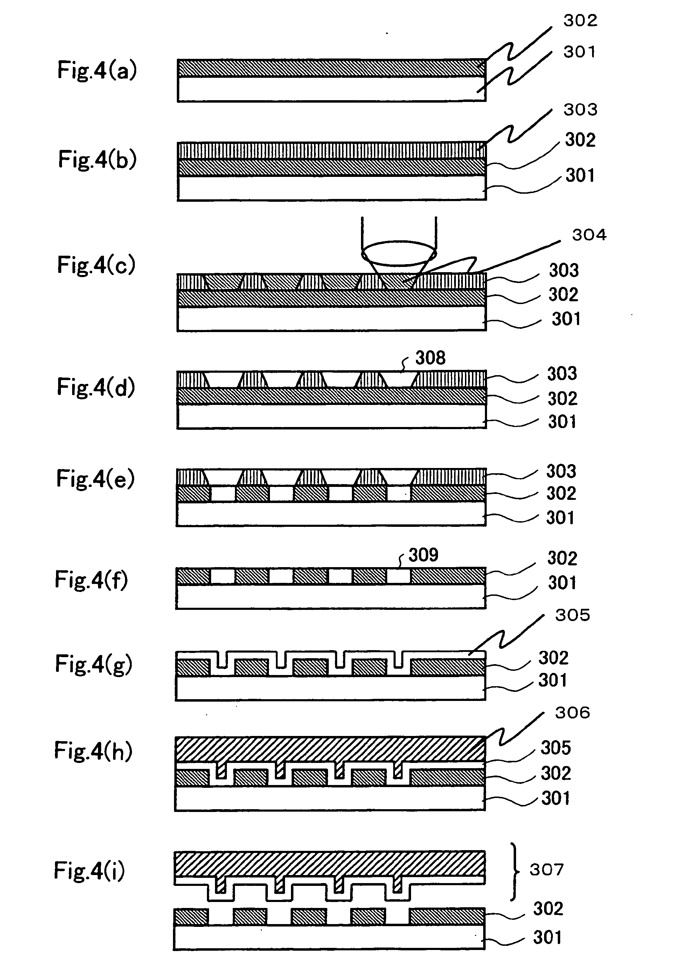

Then, a fabrication method of a stamper for an optical information recording medium of Embodiment 2 of the present invention is describedbelow by referring to Figure 4. Figures 4 (a) to 4 (i) are illustrations showing steps of the fabrication method of a stamper for an optical information recording medium of the Embodiment 2 of the present invention.

Figure 4 is different from Figure 1 which shows the Embodiment 1 in material forming an etching layer. Though the etching layer 102 is formed by an acrylic material in Figure 1, an etching layer 302 in Figure 4 is formed by SiO₂ (content of 90% or more). Other configuration in Figure 4 is the same as that in Figure 1.

First, the etching layer 302 of SiO₂ is formed on an Si substrate 301 so that the thickness becomes almost uniform on the entire surface at approx. 60 nm (Figure 4(a)).

Then, a resist layer 303 which is photoresist formed by an inorganic oxide material of TeOxPd (0<x<2) is formed on the etching layer 302 (Figure 4 (b)).

Then, a laser beam narrowed down by passing through a lens whose intensity is modulated in accordance with a signal to be recorded is applied from the surface of the resist layer 303 to change crystal states of an exposed portion 304 (Figure 4 (c)).

Then, the exposed portion 304 whose crystal states are changed is selectively etched by using an etching rate difference due to the difference between crystal states of the resist layer 303 and applying a developer to form a substantially mortar-shaped concave pattern 308 by the resist layer 303 (Figure 4 (d)).

Then, plasma dry etching using CHF₃ gas is performed from the surface of the resist layer 303. The resist layer 303 in the etching layer 302 is removed and a portion exposed to the outside, that is, a resist portion in which up to the interface of the etching layer 302 is etched by development is removed through dry etching until reaching the interface of the Si substrate 301 (Figure 4 (e)).

After the dry etching, the resist layer 303 is removed by a strong-alkali or -acid exfoliation solution (Figure 4 (f)). Thereby, a concave signal pattern 309 is formed on the resist layer 303. The resist layer 303 having the concave signal pattern 309 and the Si substrate 301 comprises the master disk of a stamper.

Then, a conductive film 305 is formed on the surface of the etching layer 302 on which a concave signal pattern 109 is formed through dry etching through metallic sputtering of Ni or the like (Figure 4 (g)).

Then, a metallic layer 306 having a thickness of hundreds of microns is formed by using the conductive film 305 as an electrode and thereby performing electroforming (Figure 4 (h)).

Finally, the portion constituted by the conductive film 305 and metallic layer 306 is exfoliated from the etching layer 302 and Si substrate 301. Thus, a stamper 307 constituted by the conductive film 305 and metallic layer 306 is obtained (Figure 4 (i)).

Also in the above fabrication steps, similarly to the case of the Embodiment 1, the concave signal pattern 309 shown in Figure 4 (f) is formed through the etching used for the concave pattern 308 formed on the resist layer 303 which is photoresist in the etching layer 302. Thereby, it is not necessary to use a layer having a photoresist-like crystal structure like a conventional example as the etching layer 302 but it is possible to use a material not causing an electrical reaction such as an oxidation-reduction reaction due to application of a voltage during electroforming. Therefore,an electrical reaction such as an oxidation-reduction reaction does not occur in the etching layer 102 due to application of a voltage during electroforming when fabricating a stamper. Therefore, it is possible to fabricate the preferable stamper 307.

SiO₂ for forming the etching layer 302 is an example of materials having an acid resistance of the present invention. Moreover, TeOxPd for forming the resist layer 303 is an example of inorganic oxides different from a material having an acid resistance of the present invention in material quality or composition. Furthermore, the exposed portion 304 is an example of a specific portion of a resist layer of the present invention. Furthermore, the configuration shown in Figure 4 (e) after dry-etching the portion of the etching layer 302 is an example of the master disk of a stamper for an optical information recording medium of the present invention.

In the case of the formation as shown in Figure 4 (a) of the etching layer 302 on the Si substrate 301, an SiO₂ layer is formed by any method of surface oxidation of the Si substrate 301 and deposition by sputtering or vapor evaporation. In this case, a case of using SiO₂ as an etching material is described. However, the etching material is not restricted to SiO₂. It is allowed to use another inorganic oxide material as long as the material has a reaction property and an etching property to an etching gas, and withstands an acid solution having a pH of 3.0 or more.

By using the same material and method as the case of the Embodiment 1 for a material and a recording and developing method of the resist layer 303 formed on the etching layer 302, it is possible to fabricate a preferable master disk.

Moreover, though CHF₃ gas is used as the etching gas of the etching layer 302 formed of an SiO₂ material, the etching gas is not restricted to CHF₃ gas. Mixed gas containing fluorine or other gas can be used as long as the gas has a preferable selection ratio to the resist layer 302. Furthermore, this Embodiment 2 uses the Si substrate 301 as an etching stopper layer. However, when using gas capable of etching an SiO₂ material, it is also possible to fabricate a master disk having a preferable depth of a signal pit by using another material other than an Si material as an etching stopper layer as long as the material has an etching resistance against the gas.

By performing an electroforming method, a method of forming the conductive film 305, and a method of exfoliating the conductive film 305 andmetallic layer 306 from the etching layer 302 and Si substrate 301 similarly to the case of the Embodiment 1, it is possible to fabricate the preferable stamper 307.

As a result of fabricating a disk and evaluating a signal similarly to the case of the Embodiment 1 by using the fabrication method of a stamper for an optical information recording medium of this Embodiment 2, the same signal characteristic results same as those shown in Figures 3 and 7 for the Embodiment 1 are obtained.

The description of this Embodiment 2 says that one layer of the conductive film 305 is formed. However, it is also allowed to form two layers of conductive films similarly to that shown in Figure 2 for the Embodiment 1 and exfoliate a stamper between the conductive films. In this case, the same advantage as the Embodiment 1 is obtained.

In the case of the fabrication method of a stamper for an optical information recording medium of this Embodiment 2, preferable electroforming can be made because of using a resin material capable of withstanding an acid solution having a pH of 3.0 or more generally used for electroforming as the etching layer 302 and forming the concave convex pattern of a signal on the etching layer 302. Moreover, it is possible to fabricate the preferable stamper 307 because an electrical reaction such as an oxidation-reduction reaction is not caused due to application of a voltage during electroforming. Furthermore, it is possible to fabricate a disk having a preferable signal characteristic by injection-compression-molding a substrate using the stamper 307. Furthermore, by using an inorganic oxide material for the etching layer 302, it is possible to preferably exfoliate the stamper 107 from a metallic material.

In the description of each embodiment, the portion of a resist layer which is exposed by a laser beam and whose crystal states are changed is removed through etching to form a concave portion. However, it is also allowed to remove an unexposed portion through etching and leave a portion whose crystal states are changed to form a convex portion by a resist layer. Also in this case, the advantage same as that described for each embodiment is obtained.

Furthermore, the description for each embodiment says that a resin material or inorganic oxide material capable of withstanding an acid solution having a pH value of 3.0 or more generally used for electroforming is used as an etching layer and an inorganic oxide material is used as a resist layer. The present invention is not restricted by a specific composition of the material of each layer as long as an etching layer and a resist layer can be individually and selectively etched through the etching in each step. Furthermore, in the examples shown in Figures 3 and 7, the width of the signal pit is 0.15 *µ* m. However 0.18 *µ* m, which is commonly used in the high-density optical information recording medium can be applied.

A fabrication method of a stamper for an optical information recording medium, a master disk of a stamper for an optical information recording medium, and an optical information recording medium of the present invention have advantages that electroforming can be preferably performed and a fine signal can be formed and are useful as a fabrication method of a stamper for an optical information recording medium, master disk of a stamper for an optical information recording medium, optical information recording stamper, and optical information recording medium of fabricating a high-density optical information recording medium through the dry etching method.

## Claims

1. A fabrication method of a stamper for an optical information recording medium comprising:
a step of changing the crystal state of a specific portion of a photoresist layer (103, 203, 303) of a master disk having at least an etching layer (102, 202, 302) formed on an etching stopper layer (101, 201, 301) and the photoresist layer (103, 203, 303) which can be etched, formed on the etching layer (102, 202, 302) through exposure,
a step of selectively removing the specific portion of the photoresist layer (103, 203, 303) whose crystal state is changed or portions other than the specific portion through etching,
**characterized in that** said fabrication method further comprising :
a step of selectively removing a part of the etching layer (102, 202, 302) which appears because the photoresist layer (103, 203, 303) is removed and is exposed to the outside through etching,
a step of removing the remaining portion of the photoresist layer (103, 203, 303) and forming a conductive film (105, 205, 208, 305) on the surfaces of the etching stopper layer (101, 201, 301) and the etching layer (102, 202, 302),
a step of performing electroforming by using the conductive film (105, 205, 208, 305) as an electrode, and
a step of exfoliating the etching layer (102, 202, 302) and the etching stopper layer (101, 201, 301) from the conductive film (105, 205, 208, 305),
wherein the etching layer (102, 202, 302) contains a material having an acid resistance thus capable of withstanding a sulfamic-acid solution having a pH value of 3.0 or more, as a main component, and
the photoresist layer (103, 203, 303) contains inorganic oxide as a main component different from the material having an acid resistance in raw material or composition.

2. The fabrication method of a stamper for an optical information recording medium according to claim 1, wherein the material having an acid resistance is an acid-resistant resin material.

3. The fabrication method of a stamper for an optical information recording medium according to claim 1, wherein the etching layer (102, 202, 302) is a resin which can be dry-etched by oxygen or gas containing oxygen.

4. The fabrication method of a stamper for an optical information recording medium according to claim 1, wherein the etching layer (102, 202, 302) is made of a material containing acrylic or polyimide as a main component.

5. The fabrication method of a stamper for an optical information recording medium according to claim 1, wherein the etching stopper layer (101, 201, 301) is made of any one of materials Si, SiO₂, ZnSiO₂, and SiN.

6. The fabrication method of a stamper for an optical information recording medium according to claim 1 wherein the material having an acid resistance is acid-resistant inorganic oxide.

7. The fabrication method of a stamper for an optical information recording medium according to claim 6, wherein
the etching layer (102, 202, 302) is made of a material containing SiO₂ as a main component, and
the etching of removing the etching layer (102, 202, 302) is dry etching according to CHF-based gas.

8. The fabrication method of a stamper for an optical information recording medium according to claim 6, wherein the etching stopper layer (101, 201, 301) is made of an Si material.

9. The fabrication method of a stamper for an optical information recording medium according to claim 1, wherein the thickness of the etching layer (102, 202, 302) substantially ranges between 40 and 100 nm, both included.

10. The fabrication method of a stamper for an optical information recording medium according to claim 1, wherein the photoresist layer (103, 203, 303) is made of any one of a semimetal, semimetal compound, oxide of semimetal or semimetal compound, nitride of semimetal or semimetal compound, transition metal, oxide of transition metal, and nitride of transition metal.

11. The fabrication method of a stamper for an optical information recording medium according to claim 1, wherein the conductive film (105, 205, 208, 305) is formed through electroless plating.

12. The fabrication method of a stamper for an optical information storing medium according to claim 1, wherein
the step of forming the conductive film (105; 205, 208, 305) includes a step of forming a first Ni thin film (205) through sputtering of an Ni material, a step of treating the surface of the first Ni thin film (205) with plasma of O₂ or Ar gas, and a step of forming a second Ni thin film (208) on the first Ni thin film (205) through sputtering of an Ni material after the above treatment, and
the step of exfoliating the etching layer (102, 202, 302) and the etching stopper layer (101, 201, 301) from the conductive film (105, 205, 208, 305) includes a step of separating the layer on which the first Ni thin film (205) is formed from the layer on which the second Ni thin film (208) is formed.

13. The fabrication method of a stamper for an optical information storing medium according to claim 1, wherein the selection ratio between the etching rate of the etching layer (102, 202, 302) to the photoresist layer (103, 203, 303) is 1.0 or more.

14. A master disk of a stamper for an optical information recording medium having on a substrate (101, 201, 301) an etching layer (102, 202, 302) and a photoresist layer (103, 203, 303) which is formed on the etching layer (102, 202, 302) and can be etched on a substrate, wherein
the crystal state of a specific portion of the photoresist layer (103, 203, 303) is changed through exposure and the specific portion or portions other than the specific portion is or are selectively removed through etching, and
a concave portion (108, 208, 308) is formed on the etching layer (102, 202, 302) because a part of the etching layer (102, 202, 302) exposed to the outside formed when the photoresist layer (103, 203, 303) is removed is selectively removed through etching,
wherein the etching layer (102, 202, 302) contains a material having an acid resistance thus capable of withstanding a sulfamic-acid solution having a pH value of 3.0 or more, as a main component, and
the photoresist layer (103, 203, 303) contains inorganic oxide as a main component different from the material having an acid resistance in raw material or composition.

## Patentansprüche

1. Verfahren zum Herstellen einer Matrize für ein optisches Informationsaufzeichnungsmedium, das umfasst:
einen Schritt des Ändern des Kristallzustandes eines bestimmten Abschnitts einer Fotoresistschicht (103, 203, 303) einer Masterplatte, die wenigstens eine Ätzschicht (102, 202, 302), die auf einer Ätzstoppschicht (101, 201, 301) ausgebildet ist, und die Fotoresistschicht (103, 203, 303) aufweist, die geätzt werden kann und auf der Ätzschicht (102, 202, 302) über Belichtung ausgebildet wird,
einen Schritt des selektiven Entfernens des bestimmten Abschnitts der Fotoresist-Schicht (103, 203, 303), deren Kristallzustand geändert ist, oder von anderen Abschnitten außer dem bestimmten Abschnitt über Ätzen,
**dadurch gekennzeichnet, dass** das Herstellungsverfahren des Weiteren umfasst:
einen Schritt des selektiven Entfernens eines Teils der Ätzschicht (102, 202, 302), der erscheint, da die Fotoresist-Schicht (103, 203, 303) entfernt ist, und der durch Ätzen nach außen freigelegt wird,
einen Schritt des Entfernens des verbleibenden Abschnitts der Fotoresist-Schicht (103, 203, 303) und des Ausbildens eines leitenden Films (105, 205, 208, 305) auf den Oberflächen der Ätzstoppschicht (101, 201, 301) und der Ätzschicht (102, 202, 302),
einen Schritt des Durchführens von Elektroformung unter Verwendung des leitenden Films (105, 205, 208, 305) als eine Elektrode, und
einen Schritt des Abschälens der Ätzschicht (102, 202, 302) und der Ätzstoppschicht (101, 201, 301) von dem leitenden Film (105, 205, 208, 305),
wobei die Ätzschicht (102, 202, 302) ein Material, das eine Säurebeständigkeit aufweist und so in der Lage ist, einer Sulfamidsäurelösung mit einem pH-Wert von 3,0 oder mehr zu widerstehen, als einen Hauptbestandteil enthält, und
die Fotoresist-Schicht (103, 203, 303) anorganisches Oxid als einen Hauptbestandteil, der sich von dem Material unterscheidet, das eine Säurebeständigkeit aufweist, als Rohmaterial oder Zusammensetzung enthält.

2. Verfahren zum Herstellen einer Matrize für ein optisches Informationsaufzeichnungsmedium nach Anspruch 1, wobei das Material, das eine Säurebeständigkeit aufweist, ein säurebeständiges Harzmaterial ist.

3. Verfahren zum Herstellen einer Matrize für ein optisches Informationsaufzeichnungsmedium nach Anspruch 1, wobei die Ätzschicht (102, 202, 302) ein Harz ist, das mit Sauerstoff oder Gas, das Sauerstoff enthält, trockengeätzt werden kann.

4. Verfahren zum Herstellen einer Matrize für ein optisches Informationsaufzeichnungselement nach Anspruch 1, wobei die Ätzschicht (102, 202, 302) aus einem Material besteht, das Acryl oder Polyimid als einen Hauptbestandteil enthält.

5. Verfahren zum Herstellen einer Matrize für ein optisches Informationsaufzeichnungsmedium nach Anspruch 1, wobei die Ätzstoppschicht (101, 201, 301) aus jedem beliebigen der Materialien Si, SiO₂, ZnSiO₂ und SiN besteht.

6. Verfahren zum Herstellen einer Matrize für ein optisches Informationsaufzeichnungsmedium nach Anspruch 1, wobei das Material, das eine Säurebeständigkeit aufweist, säurebeständiges anorganisches Oxid ist.

7. Verfahren zum Herstellen einer Matrize für ein optisches Informationsaufzeichnungsmedium nach Anspruch 6, wobei
die Ätzschicht (102, 202, 302) aus einem Material besteht, das SiO₂ als einen Hauptbestandteil enthält, und
das Ätzen zum Entfernen der Ätzschicht (102, 202, 302) Trockenätzen mit Gas auf CHF-Basis ist.

8. Verfahren zum Herstellen einer Matrize für ein optisches Informationsaufzeichnungsmedium nach Anspruch 6, wobei die Ätzstoppschicht (101, 201, 301) aus einem Si-Material besteht.

9. Verfahren zum Herstellen einer Matrize für ein optisches Informationsaufzeichnungsmedium nach Anspruch 1, wobei die Dicke der Ätzschicht (102, 202, 302) im Wesentlichen von einschließlich 40 bis einschließlich 100 nm reicht.

10. Verfahren zum Herstellen einer Matrize für ein optisches Informationsaufzeichnungsmedium nach Anspruch 1, wobei die Fotoresist-Schicht (103, 203, 303) aus einem Halbmetall, einer Halbmetallverbindung, Oxid von Halbmetall oder einer Halbmetallverbindung, Nitrid von Halbmetall oder einer Halbmetallverbindung, Übergangsmetall, Oxid von Übergangsmetall oder Nitrid von Übergangsmetall besteht.

11. Verfahren zum Herstellen einer Matrize für ein optisches Informationsaufzeichnungsmedium nach Anspruch 1, wobei der leitende Film (105, 205, 208, 305) über stromloses Abscheiden ausgebildet wird.

12. Verfahren zum Herstellen einer Matrize für ein optisches Informationsspeichermedium nach Anspruch 1, wobei
der Schritt des Ausbildens des leitenden Films (105, 205, 208, 305) einen Schritt des Ausbildens einer ersten Ni-Dünnschicht (205) über Sputtern eines Ni-Materials, einen Schritt des Behandelns der Oberfläche des ersten Ni-Dünnfilms (205) mit Plasma aus O₂- oder Ar-Gas und einen Schritt des Ausbildens einer zweiten Ni-Dünnschicht (208) auf der ersten Ni-Dünnschicht (205) über Sputtern eines Ni-Materials nach der oben genannten Behandlung einschließt, und
der Schritt des Abschälens der Ätzschicht (102, 202, 302) und der Ätzstoppschicht (101, 201, 301) von dem leitenden Film (105, 205, 208, 305) einen Schritt des Trennens der Schicht, auf der die erste Ni-Dünnschicht (205) ausgebildet ist, von der Schicht einschließt, auf der die zweite Ni-Dünnschicht (208) ausgebildet ist.

13. Verfahren zum Herstellen einer Matrize für ein optisches Informationsspeichermedium nach Anspruch 1, wobei das Selektionsverhältnis zwischen der Ätzrate der Ätzschicht (102, 202, 302) zu der Fotoresist-Schicht (103, 203, 303) 1,0 oder mehr beträgt.

14. Masterplatte einer Matrize für ein optisches Informationsaufzeichnungsmedium, die auf einem Substrat (101, 201, 301) eine Ätzschicht (102, 202, 302) und eine Fotoresist-Schicht (103, 203, 303) aufweist, die auf der Ätzschicht (102, 202, 302) ausgebildet ist und auf ein Substrat geätzt werden kann, wobei
der Kristallzustand eines bestimmten Abschnitt der Fotoresist-Schicht (103, 203, 303) über Belichtung geändert wird und der bestimmte Abschnitt oder andere Abschnitte als der bestimmte Abschnitt über Ätzen selektiv entfernt wird/werden, und
ein konkaver Abschnitt (108, 208, 308) auf der Ätzschicht (102, 202, 302) ausgebildet ist, da ein Teil der Ätzschicht (102, 202, 302), der nach außen freiliegt und ausgebildet wird, wenn die Fotoresistschicht (103, 203, 303) entfernt wird, durch Ätzen selektiv entfernt wird,
wobei die Ätzschicht (102, 202, 302) ein Material, das eine Säurebeständigkeit aufweist und so in der Lage ist, einer Sulfamidsäurelösung mit einem pH-Wert von 3,0 oder mehr zu widerstehen, als einen Hauptbestandteil enthält, und
die Fotoresist-Schicht (103, 203, 303) anorganisches Oxid als einen Hauptbestandteil, der sich von dem Material unterscheidet, das eine Säurebeständigkeit aufweist, als Rohmaterial oder Zusammensetzung enthält.

## Revendications

1. Procédé de fabrication d'une matrice de pressage pour un support d'enregistrement optique d'informations comprenant:
une étape de changement de l'état cristallin d'une partie spécifique d'une couche de résine photosensible (103, 203, 303) d'un disque maître qui a au moins une couche de gravure (102, 202, 302) formée sur une couche d'arrêt de gravure (101, 201, 301) et la couche de résine photosensible (103, 203, 303) que l'on peut graver, formée sur la couche de gravure (102, 202, 302) par exposition,
une étape de retrait sélectif de la partie spécifique de la couche de résine photosensible (103, 203, 303) dont l'état cristallin est modifié ou des parties autres que la partie spécifique par la gravure,
**caractérisé en ce que** ledit procédé de fabrication comprend en plus:
une étape de retrait sélectif d'une partie de la couche de gravure (102, 202, 302) qui apparaît parce que la couche de résine photosensible (103, 203, 303) est retirée et est exposée à l'extérieur par la gravure,
une étape de retrait de la partie restante de la couche de résine photosensible (103, 203, 303) et de formation d'un film conducteur (105, 205, 208, 305) sur les surfaces de la couche d'arrêt de gravure (101, 201, 301) et de la couche de gravure (102, 202, 302).
une étape d'exécution d'un électroformage en utilisant le film conducteur (105, 205, 208, 305) en tant qu'électrode, et
une étape d'exfoliation de la couche de gravure (102, 202, 302) et de la couche d'arrêt de gravure (101, 201, 301) du film conducteur (105, 205, 208, 305),
où la couche de gravure (102, 202, 302) contient un matériau ayant un résistance à l'acide capable ainsi de résister à une solution d'acide sulfamique ayant une valeur de pH de 3,0 ou plus, comme composante principale, et
la couche de résine photosensible (103, 203, 303) contient un oxyde inorganique comme composante principale qui diffère, en termes de matière première ou composition, du matériau ayant une résistance à l'acide.

2. Procédé de fabrication d'une matrice de pressage pour un support d'enregistrement optique d'informations selon la revendication 1, dans lequel le matériau ayant une résistance à l'acide est un matériau en résine résistant à l'acide.

3. Procédé de fabrication d'une matrice de pressage pour un support d'enregistrement optique d'informations selon la revendication 1, dans lequel la couche de gravure (102, 202, 302) est une résine qui peut être gravée à sec par oxygène ou par un gaz contenant de l'oxygène.

4. Procédé de fabrication d'une matrice de pressage pour un support d'enregistrement optique d'informations selon la revendication 1, dans lequel la couche de gravure (102, 202, 302) est réalisée en un matériau contenant de l'acrylique ou du polyimide comme composant principal.

5. Procédé de fabrication d'une matrice de pressage pour un support d'enregistrement optique d'informations selon la revendication 1, dans lequel la couche d'arrêt de gravure (101, 201, 301) est réalisée en un matériau quelconque parmi le Si, le SiO₂, le ZnSiO₂, et le SiN.

6. Procédé de fabrication d'une matrice de pressage pour un support d'enregistrement optique d'informations selon la revendication 1, dans lequel le matériau ayant une résistance à l'acide est un oxyde inorganique résistant à l'acide.

7. Procédé de fabrication d'une matrice de pressage pour un support d'enregistrement optique d'informations selon la revendication 6, dans lequel
la couche de gravure (102, 202, 302) est réalisée en un matériau contenant du SiO₂ comme composante principale, et
la gravure de retrait de la couche de gravure (102, 202, 302) est une gravure à sec selon un gaz à base de CHF.

8. Procédé de fabrication d'une matrice de pressage pour un support d'enregistrement optique d'informations selon la revendication 6, dans lequel la couche d'arrêt de gravure (101, 201, 301) est réalisée en un matériau à base de Si.

9. Procédé de fabrication d'une matrice de pressage pour un support d'enregistrement optique d'informations selon la revendication 1, dans lequel l'épaisseur de la couche de gravure (102, 202, 302) se trouve essentiellement dans la gamme de 40 et 100nm, les deux compris.

10. Procédé de fabrication d'une matrice de pressage pour un support d'enregistrement optique d'informations selon la revendication 1, dans lequel la couche de résine photosensible (103, 203, 303) est réalisée en un matériau quelconque parmi un semi-métal, un composé semi-métallique, un oxyde de semi-métal ou de composé semi-métallique, un nitrure de semi-métal ou de composé semi-métallique, un métal de transition, un oxyde de métal de transition, et un nitrure de métal de transition.

11. Procédé de fabrication d'une matrice de pressage pour un support d'enregistrement optique d'informations selon la revendication 1, dans lequel le film conducteur (105, 205, 208, 305) est formé par le biais d'un placage anélectrolytique.

12. Procédé de fabrication d'une matrice de pressage pour un support de stockage optique d'informations selon la revendication 1, dans lequel
l'étape de formation du film conducteur (105, 205, 208, 305) comprend une étape de formation d'un premier film mince de Ni (205) en pulvérisant un matériau à base de Ni, une étape de traitement de la surface du premier film mince de Ni (205) avec un plasma de O₂ ou un gaz Ar, et une étape de formation d'un deuxième film mince de Ni (208) sur le premier film mince de Ni (205) en pulvérisant un matériau Ni après le traitement précédent, et
l'étape d'exfoliation de la couche de gravure (102, 202, 302) et de la couche d'arrêt de gravure (101, 201, 301) du film conducteur (105, 205, 208, 305) comprend une étape de séparation de la couche sur laquelle le premier film mince de Ni (205) est formé de la couche sur laquelle le deuxième film mince de Ni (208) est formé.

13. Procédé de fabrication d'une matrice de pressage pour un support de stockage optique d'informations selon la revendication 1, dans lequel le rapport de sélection entre le taux de gravure de la couche de gravure (102, 202, 302) par la couche de résine photosensible (103, 203, 303) est de 1,0 ou plus.

14. Disque maître d'une matrice de pressage pour un support d'enregistrement optique d'informations ayant sur un substrat (101, 201, 301) une couche de gravure (102, 202, 302) et une couche de résine photosensible (103, 203, 303) qui est formée sur la couche de gravure (102, 202, 302) et que l'on peut graver sur un substrat , dans lequel
l'état cristallin d'une partie spécifique de la couche de résine photosensible (103, 203, 303) change par l'exposition et la partie spécifique ou les parties autres que la partie spécifique est/sont sélectivement retirées par la gravure, et
une partie concave (108, 208, 308) est formée sur la couche de gravure (102, 202, 302) parce qu'une partie de la couche de gravure (102, 202, 302) exposée à l'extérieur formée lorsque la couche de résine photosensible (103, 203, 303) est retirée, est sélectivement retirée par la gravure.
où la couche de gravure (102, 202, 302) contient un matériau ayant une résistance à l'acide lui permettant ainsi de résister à une solution d'acide-sulfamique ayant une valeur de pH de 3,0 ou plus, comme composante principale, et
la couche de résine photosensible (103, 203, 303) contient un oxyde inorganique comme composante principale qui diffère, en termes de matière première ou de composition, du matériau ayant une résistance à l'acide.
